# EUROPÄISCHE PATENTANMELDUNG

(11) **EP 1 596 487 A1**
(43) Veröffentlichungstag der Anmeldung: **16.11.2005**
(21) Anmeldenummer: 04011077.7
(22) Anmeldetag: 10.05.2004
(51) Int. Cl.: H02K 1/28, H02K 15/02

(54) **Rotor und Verfahren zur Herstellung eines Rotors für einen elektromotorischen Kraftfahrzeug-Stellantrieb**

(71) Anmelder: SIEMENS AKTIENGESELLSCHAFT, 80333 München (DE)
(72) Erfinder: Viernekes, Gerald, 97437 Hassfurt (DE); Zaps, Klaus, 97332 Volkach (DE)

(57) **Zusammenfassung**

Die Erfindung betrifft einen Rotor sowie ein Verfahren zur Herstellung eines Rotors für einen elektromotorischen Kraftfahrzeug-Stellantrieb. Der Rotor weist eine Welle (2) und ein an der Welle befestigtes, eine Vielzahl von Lamellen aufweisendes Läuferpaket (1) auf. Mindestens eine der endseitigen Lamellen (L1,Ln) des Läuferpaketes (1) ist an ihrem Innenumfang mit einem Kragen (K1,Kn) versehen, mittels dessen das Läuferpaket (1) an der Welle (2) befestigt ist. Die Innendurchmesser der nicht mit einem Kragen versehenen Lamellen (L2,...,L(n-1)) sind zumindest geringfügig größer als der Außendurchmesser der Welle.

## Beschreibung

Die Erfindung betrifft einen Rotor und ein Verfahren zur Herstellung eines Rotors für einen elektromotorischen Kraftfahrzeug-Stellantrieb.

Elektromotorische Kraftfahrzeug-Stellantriebe, beispielsweise Fensterheber-Antriebe oder Antriebe zur Betätigung des Schiebedaches, weisen einen Rotor auf, der mit einer Welle und einem an der Welle befestigten, eine Vielzahl von Lamellen enthaltenden Läuferpaket versehen ist.

Die Befestigung des Läuferpaketes auf der Welle erfolgt üblicherweise mittels einer Presspassung. Dabei sind die einzelnen Lamellen des Läuferpaketes an ihrem Innenumfang mit Erhebungen versehen. Beim Aufschieben des Läuferpaketes auf die Welle sind erhebliche Reibungskräfte zu überwinden, bis das Läuferpaket an der gewünschten Position auf der Welle positioniert ist.

Ein Beispiel für eine derartige Presspassung ist in der DE 34 35 508 A1 beschrieben. Dort ist zur Aufnahme und Halterung auf der Läuferwelle mittig in jede Blechlamelle des Läuferpaketes eine Wellenöffnung eingestanzt, die eine Polygonform aufweist, durch die ein toleranzausgleichendes federndes Eindrücken der Welle möglich ist.

Ein weiteres Beispiel für eine derartige Presspassung ist in der US 6,265,802 B1 beschrieben. Dort ist ein Läuferpaket offenbart, das eine Vielzahl von Lamellen aufweist, die an ihrem Innenumfang jeweils mit Vorsprüngen versehen sind. Diese Vorsprünge werden beim Einschieben der Welle, bei welchem erhebliche Reibungskräfte zu überwinden sind, zusammengedrückt und bewirken bei eingeschobener Welle den gewünschten Presssitz des Läuferpakets auf der Welle.

Ein Nachteil der vorstehend beschriebenen Presspassung besteht darin, dass beim Aufschieben des Läuferpaketes auf die Welle Reibungskräfte zu überwinden sind. Ein weiterer Nachteil der vorstehend beschriebenen Presspassung besteht darin, dass beim Vorliegen einer Welle mit kleinem Durchmesser die Wahrscheinlichkeit eines Verbiegens oder Knickens der Welle beim Fügeprozess vergleichsweise groß ist.

Der Erfindung liegt die Aufgabe zugrunde, einen Weg aufzuzeigen, wie die vorstehend beschriebenen Nachteile vermieden werden können.

Diese Aufgabe wird durch einen Rotor mit den im Anspruch 1 sowie durch ein Verfahren mit den im Anspruch 8 angegebenen Merkmalen gelöst. Vorteilhafte Ausgestaltungen und Weiterbildungen der Erfindung ergeben sich aus den abhängigen Ansprüchen.

Die Vorteile der Erfindung bestehen insbesondere darin, dass ein Läuferpaket ohne die Notwendigkeit, Reibungskräfte überwinden zu müssen, auf die Welle aufgeschoben werden kann. Ist durch dieses Aufschieben die gewünschte Positionierung des Läuferpaketes auf der Welle erreicht, dann wird durch einen Prägevorgang mittels eines Stempels der Kragen der endseitigen Lamellen des Läuferpaketes niedergedrückt und mit der Welle verprägt. Dadurch wird die gewünschte Befestigung des Läuferpaketes auf der Welle erreicht.

Vorzugsweise ist - wie im Anspruch 2 angegeben - das Läuferpaket an seinen beiden Endseiten jeweils mit einer Lamelle versehen, die einen Kragen aufweist. Dadurch wird erreicht, dass das Läuferpaket beidendseitig an der Welle befestigt ist.

Durch die im Anspruch 3 angegebene Positionierung der Krägen der endseitigen Lamellen in jeweils einer umlaufenden Nut der Welle wird sowohl die Befestigung des Läuferpaketes an der Welle verbessert als auch beim Aufschieben die Positionierung des Läuferpaketes auf der Welle erleichtert.

Durch die Merkmale des Anspruchs 4, gemäß welchem zwei oder drei der benachbarten endseitigen Lamellen mit einem Kragen versehen sind, wird die Befestigung des Läuferpakets auf der Welle weiter verbessert.

Sind die Krägen der Lamellen umlaufend ausgebildet, wie es Gegenstand des Anspruchs 5 ist, dann ist das Läuferpaket entlang des gesamten Umfanges der Welle an dieser befestigt.

Weist hingegen, wie es im Anspruch 6 angegeben ist, der Kragen einer Lamelle mehrere voneinander beabstandete Kragensegmente auf, dann ist das nach dem Aufschieben des Läuferpakets auf die Welle erfolgende Verprägen des Kragens mit der Welle erleichtert.

Weitere vorteilhafte Eigenschaften der Erfindung ergeben sich aus deren beispielhafter Erläuterung anhand der Zeichnungen. Es zeigt
- Figur 1: eine schematische Längsschnittdarstellung, gemäß welcher ein Läuferpaket noch nicht auf die zugehörige Welle aufgeschoben ist,
- Figur 2: eine schematische Längsschnittdarstellung, gemäß welcher das Läuferpaket auf die Welle aufgeschoben ist,
- Figur 3: eine schematische Längsschnittdarstellung, gemäß welcher das Läuferpaket an der Welle befestigt ist,
- Figur 4: eine schematische Längsschnittdarstellung gemäß eines weiteren Ausführungsbeispiels der Erfindung,
- Figur 5: eine schematische Vorderansicht zur Veranschaulichung einer ersten Ausführungsform einer Lamelle mit Kragen,
- Figur 6: eine schematische Vorderansicht zur Veranschaulichung einer zweiten Ausführungsform einer Lamelle mit Kragen,
- Figur 7: eine perspektivische Skizze eines auf einer Welle befestigten Läuferpakets und
- Figur 8: eine schematische Längsschnittdarstellung gemäß eines weiteren Ausführungsbeispiels der Erfindung.

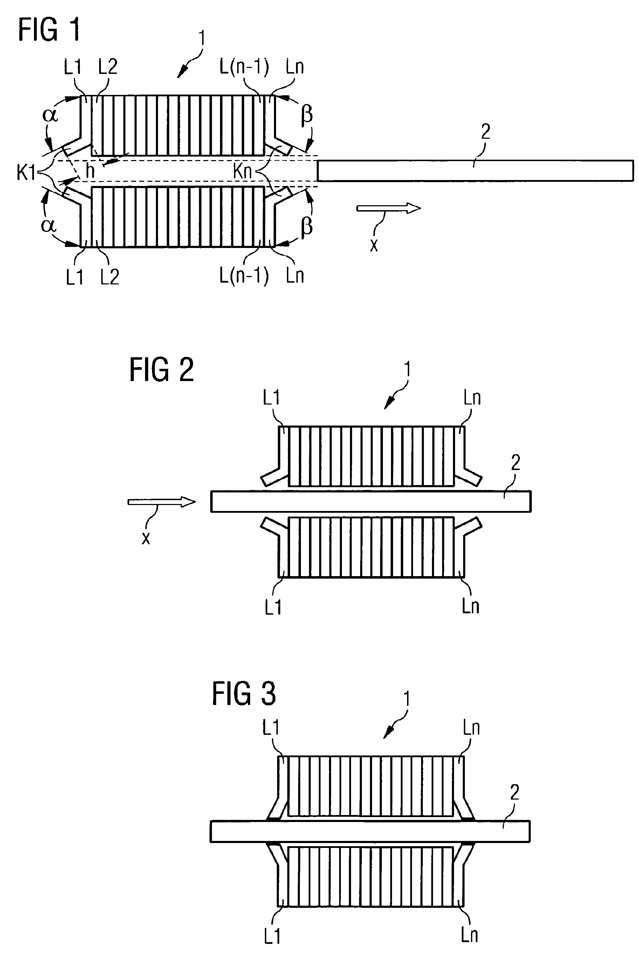

Die Figur 1 zeigt eine schematische Längsschnittdarstellung, gemäß welcher ein Läuferpaket 1 noch nicht auf die zugehörige Welle 2 aufgeschoben ist. Das Läuferpaket 1 weist eine Vielzahl von Lamellen L1, L2, ..., L(n-1), Ln auf, die in bekannter Weise in Axialrichtung hintereinander angeordnet und miteinander verbunden sind. Die Lamellen L2, ..., L(n-1) weisen eine mittig angeordnete Wellenöffnung auf, die zumindest etwas größer ist als der Außendurchmesser der Welle 2, wie es durch die gestrichelten Linien in der Figur 1 angedeutet ist.

Die beiden endseitigen Lamellen L1 und Ln des Läuferpakets 1 sind an ihrem Innenumfang mit einem Kragen K1 bzw. Kn versehen. Dieser Kragen verläuft im nicht aufgeschobenen Zustand des Läuferpakets in einem Winkel von beispielsweise etwa 135° relativ zur Lamellenebene. Dies ist in der Figur 1 durch die Winkelangaben α und β veranschaulicht, die beide im Bereich von 135° liegen. Die Höhe h des Kragens K1 ist derart gewählt, dass der Kragen K1 nach dem Aufschieben des Läuferpakets 1 auf die Welle 2 und einem Niederdrücken des Kragens K1 in Richtung des Pfeiles x mit der Welle 2 kontaktiert ist. Der Kragen Kn hat dieselbe Höhe wie der Kragen K1. Dadurch wird erreicht, dass der Kragen Kn nach dem Aufschieben des Läuferpakets 1 auf die Welle 2 und einem Niederdrücken des Kragens Kn in Gegenrichtung des Pfeiles x ebenfalls mit der Welle 2 kontaktiert ist.

Dieses Niederdrücken der Krägen K1 und Kn erfolgt vorzugsweise mittels eines Stempels und hat zur Folge, dass die genannten Krägen K1 und Kn und damit das gesamte Läuferpaket 1 mit der Welle 2 verprägt sind, wie es in der Figur 3 veranschaulicht ist.

Das Aufschieben und Befestigen des Läuferpakets 1 auf die bzw. an der Welle 2 umfasst demnach die folgenden Verfahrensschritte:
- Bereitstellen eines eine Vielzahl von Lamellen L1, ..., Ln aufweisenden Läuferpakets 1, bei welchem mindestens eine, vorzugsweise beide endseitigen Lamellen L1 und Ln an ihrem Innenumfang mit einem Kragen K1 bzw. Kn versehen sind (siehe Figur 1),
- Aufschieben eines derartigen Läuferpakets 1 in axialer Richtung x auf eine zugehörige Welle 2, bis die gewünschte axiale Position des Läuferpakets 1 auf der Welle 2 erreicht ist (siehe Figur 2), und dann
- Verprägen des Kragens K1 bzw. Kn der endseitigen Lamellen K1 und Kn des Läuferpakets 1 mit der Welle 2 zur Befestigung des Läuferpakets auf der Welle (siehe Figur 3).

Durch die beschriebene Abwinklung des Kragens der endseitigen Lamellen relativ zur Lamellenebene und die Wahl des Durchmesser-Verhältnisses von Innendurchmesser der nicht mit einem Kragen versehenen Lamellen des Läuferpakets zu Außendurchmesser der Rotorwelle derart, dass dieses Durchmesser-Verhältnis eine Übergangs- oder Spielpassung darstellt, wird in vorteilhafter Weise erreicht, dass beim Aufschieben des Läuferpakets auf die Welle nur ein geringer bzw. kein Reibungswiderstand überwunden werden muss, dieses Aufschieben also kraftarm bis kraftfrei erfolgen kann. Erst im aufgeschobenen Zustand werden die Krägen der an den beiden Endseiten des Läuferpakets angeordneten Lamellen niedergedrückt und mit der Welle verprägt.

Dies erlaubt ein einfaches Aufschieben und Befestigen des Läuferpakets an der Welle. Auch wenn diese Welle nur einen vergleichsweise kleinen Durchmesser aufweist, ist im Vergleich zum bekannten Vorgehen die Wahrscheinlichkeit einer Beschädigung der Welle beim Aufschieben bzw. Befestigen des Läuferpakets reduziert. Insbesondere erfolgt auch keine Beschädigung der Oberfläche der Welle.

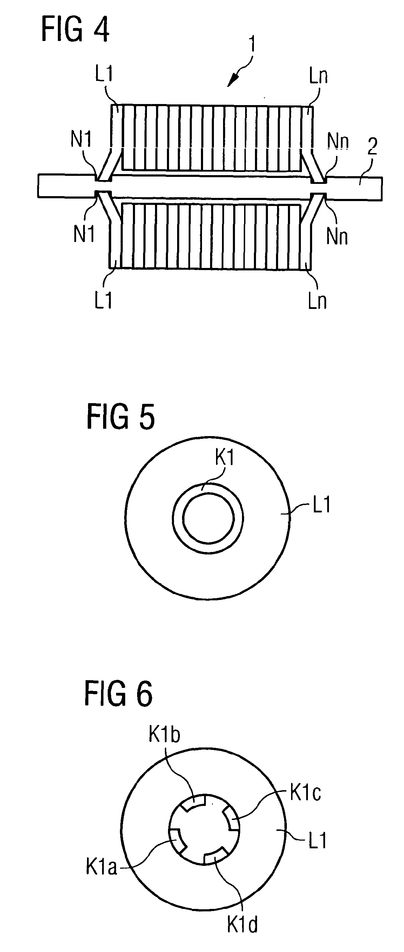

Die Figur 4 zeigt eine schematische Längsdarstellung gemäß einem weiteren Ausführungsbeispiel für die Erfindung. Gemäß diesem weiteren Ausführungsbeispiel ist die Welle 2 in denjenigen Bereichen, in denen die an den Endseiten des Läuferpakets 1 befindlichen Lamellen L1 und Ln nach dem Aufschieben befestigt werden sollen, mit umlaufenden Nuten N1 und Nn versehen. In diesen Nuten N1 und Nn liegen die in Radialrichtung inneren Endbereiche der Krägen K1 und Kn, nachdem sie mittels eines Stempels niedergedrückt und mit der Welle 2 verprägt wurden. Die Verwendung derartige Nuten führt zu einer Verbesserung der Befestigung des Läuferpakets auf der Welle und zu einer Erleichterung des Aufschiebens des Läuferpakets auf die Welle, da anhand der Nuten der Welle leicht erkennbar ist, wann beim Aufschieben die gewünschte Position des Läuferpakets auf der Welle erreicht ist.

Die Figur 5 zeigt eine schematische Vorderansicht zur Veranschaulichung einer ersten Ausführungsform einer Lamelle mit Kragen. Aus dieser Figur geht hervor, dass die Lamelle L1 eine runde Grundfläche aufweist, aus der hier nicht dargestellte Aussparungen herausgestanzt sind welche die Rotornuten bilden und der Kragen K1 am Innendurchmesser umlaufend ausgebildet ist. Dies hat den Vorteil, dass der Kragen nach dem Aufschieben des Läuferpakets auf die Welle und dem Niederdrücken sowie dem Verprägen mit der Welle am gesamten Außenumfang der Welle anliegt, wodurch eine sichere Befestigung des Läuferpakets 1 auf der Welle 2 erreicht wird.

Die Figur 6 zeigt wie Figur 5 eine schematische Vorderansicht einer Lamelle zur Veranschaulichung einer zweiten Ausführungsform der Lamelle mit Kragen. Aus dieser Figur geht hervor, dass die Lamelle L1, ebenso wie die in Figur 5 dargestellte, eine runde Grundfläche aufweist und der Kragen aus mehreren Kragensegmenten K1a, K1b, K1c und K1d besteht, die jeweils im Umfangsrichtung voneinander beabstandet sind. Dies hat den Vorteil, dass der Kragen nach dem Aufschieben des Läuferpakets auf die Welle leichter niedergedrückt und mit der Welle verprägt werden kann als bei der in der Figur 5 gezeigten Ausführungsform, da die einzelnen Kragensegmente unabhängig voneinander niedergedrückt werden können.

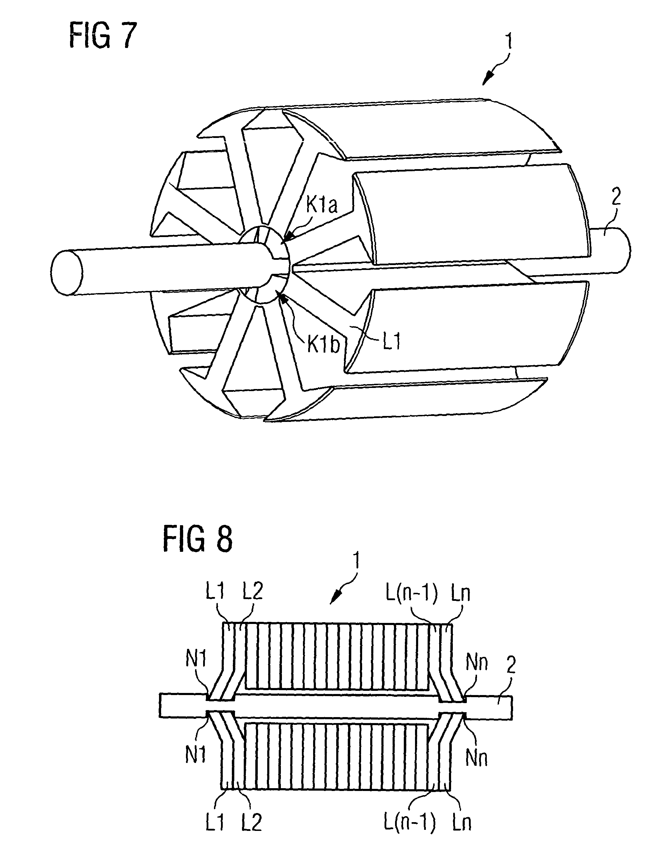

Die Figur 7 zeigt eine perspektivische Skizze eines auf einer Welle befestigten Läuferpakets. Bei diesem Läuferpaket sind über den Umfang jeder Lamelle verteilt Rotornuten eingestanzt, welche zur Aufnahme einer Läuferwicklung vorgesehen sind. Das gezeigte Läuferpaket 1 ist mit der Welle 2 fest verbunden unter Verwendung des Kragens der in der Figur 7 vorderseitigen Endlamelle L1, wobei dieser Kragen mehrere Kragensegmente aufweist, die mit der Welle verprägt sind. Zwei dieser Kragensegmente sind in der Figur 7 gezeigt und dort mit den Bezugszeichen K1a und K1b versehen.

Die Figur 8 zeigt eine schematische Längsschnittdarstellung gemäß einem weiteren Ausführungsbeispiel für die Erfindung. Gemäß diesem weiteren Ausführungsbeispiel sind sowohl die endseitigen Lamellen L1 und Ln als auch die jeweils dazu benachbarten Lamellen L2 und L(n-1) mit einem Kragen versehen. Die in Radialrichtung inneren Endbereiche der Krägen der Lamellen L1 und L2 sind nach dem Verprägen in einer Nut N1 der Welle 2 positioniert. Die in Radialrichtung inneren Endbereiche der Krägen der Lamellen Ln und L(n-1) sind nach dem Verprägen in einer Nut Nn der Welle 2 positioniert. Durch das Verprägen zweier oder auch mehrerer benachbarter Lamellen an den beiden axialen Endseiten des Läuferpakets mit der Welle 2 wird die Befestigung des Läuferpakets 1 an der Welle 2 verbessert.

Die Erfindung betrifft also einen Rotor für einen elektromotorischen Kraftfahrzeug-Stellantrieb, der eine Welle und ein an der Welle befestigtes, aus mehreren Lamellen bestehendes Läuferpaket aufweist. Die endseitigen Lamellen des Läuferpakets sind jeweils mit einem Kragen versehen, der während des Aufschiebens des Läuferpakets auf die Welle in hochgestelltem Zustand ist. Die nicht mit einem Kragen versehenen inneren Lamellen des Läuferpakets weisen einen Innendurchmesser auf, der eine Übergangs- oder Spielpassung mit dem Außendurchmesser der Welle bildet. Das Aufschieben des Läuferpakets auf die Welle kann damit kraftarm bis kraftfrei erfolgen, d. h. ohne die Notwendigkeit des Überwindens von zu großen Reibungswiderständen. Ist durch das Aufschieben die gewünschte axiale Position des Läuferpakets auf der Welle erreicht, dann erfolgt eine Befestigung des Läuferpakets auf der Welle durch ein Niederdrücken und Verprägen der Krägen der endseitigen Lamellen mit der Welle, vorzugsweise unter Verwendung eines Stempels. Im verprägten Zustand haben lediglich die Krägen der endseitigen Lamellen des Läuferpakets Kontakt mit der Welle. Die inneren Lamellen des Läuferpakets sind in verprägtem Zustand von der Welle beabstandet.

## Patentansprüche

1. Rotor für einen elektromotorischen Kraftfahrzeug-Stellantrieb, mit einer Welle und einem an der Welle befestigten, eine Vielzahl von Lamellen aufweisenden Läuferpaket, **dadurch gekennzeichnet, dass** mindestens eine der endseitigen Lamellen (L1, Ln) des Läuferpaketes an ihrem Innenumfang mit einem Kragen (K1, Kn) versehen ist, das Läuferpaket (1) mittels dieses Kragens an der Welle (2) befestigt ist und die Innendurchmesser der nicht mit einem Kragen versehenen Lamellen des Läuferpaketes eine Übergangs- oder Spielpassung mit dem Außendurchmesser der Welle bilden.

2. Rotor nach Anspruch 1, **dadurch gekennzeichnet, dass** das Läuferpaket an seinen beiden Endseiten je eine mit einem Kragen versehene Lamelle aufweist und das Läuferpaket mittels des Kragens beider endseitiger Lamellen an der Welle befestigt ist.

3. Rotor nach einem der vorhergehenden Ansprüche, **dadurch gekennzeichnet, dass** der Kragen der endseitigen Lamellen jeweils in einer umlaufenden Nut (N1, Nn) der Welle (2) positioniert ist (Figur 4).

4. Rotor nach einem der vorhergehenden Ansprüche, **dadurch gekennzeichnet, dass** zwei oder drei einander benachbarte endseitige Lamellen des Läuferpaketes mit je einem Kragen versehen sind und das Läuferpaket mittels dieser Krägen an der Welle befestigt ist (Figur 8).

5. Rotor nach einem der vorhergehenden Ansprüche, **dadurch gekennzeichnet, dass** der Kragen einer Lamelle umlaufend ausgebildet ist (Figur 5).

6. Rotor nach einem der Ansprüche 1 - 4, **dadurch gekennzeichnet, dass** der Kragen einer Lamelle mehrere Kragensegmente (K1a, K1b, K1c, K1d) aufweist, die voneinander beabstandet sind (Figur 6).

7. Rotor nach einem der vorhergehenden Ansprüche, **dadurch gekennzeichnet, dass** der Kragen der endseitigen Lamellen des Läuferpaketes mit der Welle verprägt ist.

8. Verfahren zur Herstellung eines Rotors für einen elektromotorischen Kraftfahrzeug-Stellantrieb mit folgenden Schritten:
- Bereitstellen eines eine Vielzahl von Lamellen aufweisenden Läuferpaketes, bei welchem mindestens eine der endseitigen Lamellen des Läuferpaketes an ihrem Innenumfang mit einem Kragen versehen ist,
- Aufschieben des Läuferpaketes auf die Welle und
- Verprägen des Kragens der endseitigen Lamellen des Läuferpaketes mit der Welle zur Befestigung des Läuferpaketes auf der Welle.
